# EUROPÄISCHE PATENTSCHRIFT

(11) **EP 2 981 429 B1**
(45) Veröffentlichungstag und Bekanntmachung des Hinweises auf die Patenterteilung: **09.05.2018**
(21) Anmeldenummer: 14710924.3
(22) Anmeldetag: 19.03.2014
(51) Int. Cl.: B60K 37/06, B60H 1/00, H01H 19/00, H01H 19/02, H01H 19/54

(54) **BAUKASTENSYSTEM EINES BEDIENGERÄTES**
MODULAR SYSTEM OF AN OPERATING DEVICE
SYSTÈME MODULAIRE D'APPAREIL DE COMMANDE

(30) Priorität: 03.04.2013 DE 102013205884
(43) Veröffentlichungstag der Anmeldung: 10.02.2016
(73) Patentinhaber: Mahle International GmbH, 70376 Stuttgart (DE)
(72) Erfinder: DE LA COBA DENNINGER, Sebastian, 71642 Ludwigsburg (DE); DEUßER, Ulrich, 64390 Erzhausen (DE); HIPP-KALTHOFF, Christoph, 70192 Stuttgart (DE); KNORR, Hans-Henning, 73630 Remshalden (DE); VOIGT, Klaus, 74321 Bietigheim-Bissingen (DE)
(74) Vertreter: BRP Renaud & Partner mbB Rechtsanwälte Patentanwälte Steuerberater
(86) Internationale Anmeldenummer: PCT/EP2014/055522
(87) Internationale Veröffentlichungsnummer: WO 2014/161720

(56) Entgegenhaltungen:
- EP-A2- 0 983 887
- DE-U1- 9 300 295
- DE-U1-202007 008 683
- US-A1- 2002 063 046

## Beschreibung

Die vorliegende Erfindung betrifft ein Baukastensystem eines Bediengerätes, insbesondere zur Beheizung oder Klimatisierung des Innenraums eines Fahrzeuges. Die Erfindung betrifft außerdem ein aus einem derartigen Baukastensystem gebautes Bediengerät.

Bediengeräte sind in modernen Kraftfahrzeugen hinlänglich bekannt und dienen insbesondere der Steuerung bzw. Regelung der Temperatur. Ein derartiges Bediengerät dient somit beispielsweise der Einstellung der Klimaanlage, insbesondere der Temperatur bzw. der Lüftungsleistung. Beispielsweise ist ein Bediengerät mit den Merkmalen des Oberbegriffs des Anspruchs 1 aus der DE 2007 008 683 U1 bekannt.

Nachteilig bei bekannten Bediengeräten ist jedoch, dass diese für jede Ausstattungslinie und für jeden Fahrzeugtyp individuell gestaltet sind, wodurch für sämtliche Ausstattungslinien oftmals eine Vielzahl unterschiedlichster Bediengeräten vorgehalten werden muss, was einen nicht unerheblichen logistischen Aufwand und Investitionen in Werkzeuge und Vorrichtungen erfordert.

Die vorliegende Erfindung beschäftigt sich daher mit dem Problem, die aus dem Stand der Technik im Zusammenhang mit derartigen Bediengeräten bekannten Nachteile zu beheben.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, nicht mehr wie bisher für jede Ausstattungsvariante eines Kraftfahrzeuges ein eigenes Bediengerät zu bauen und damit vorzuhalten, sondern derartige Bediengeräte für unterschiedlichste Ausstattungsvarianten der Kraftfahrzeuge individuell und flexibel mittels eines geeigneten Baukastensystems zusammenzubauen. Das erfindungsgemäße Baukastensystem erlaubt somit unter Verwendung unterschiedlichster Komponenten die Herstellung verschiedenster Bediengeräte, die dann in die jeweiligen Kraftfahrzeuge einbaubar sind. Das erfindungsgemäße Baukastensystem für ein Bediengerät umfasst dabei zumindest ein Grundgehäuse, welches prinzipiell einteilig oder aus zumindest zwei Gehäuseteilen, hier einem vorderen und einem hinteren Gehäuseteil, zusammengesetzt sein kann. Das Grundgehäuse beinhaltet wenigstens zwei Aufnahmen, vorzugsweise drei Aufnahmen, in denen jeweils ein drehbares Bedienelement, beispielsweise eine mechanische Baugruppe zum Verstellen von Bowdenzügen, eine elektronische Vorrichtung zum Erkennen der Drehknopfposition und/oder ein elektromechanischer Drehregler, montierbar ist und eine Leiterplatte, welche insbesondere die elektronischen Komponenten des Bedienteils beinhaltet. Die mechanische Baugruppe kann dabei einen Drehknopf für einen Bowdenzug umfassen, wobei für einen Drehregler ein Potentiometer in Betracht kommen kann. Zudem kann das Baukastensystem ein Abdeckelement zum Abdecken einer nicht genutzten Aufnahme des Grundgehäuses beinhalten. Das Grundgehäuse ist somit beispielsweise mit lediglich einem Potentiometer bestückbar, wobei in diesem Fall die andere(n) Aufnahme(n) mittels entsprechender Abdeckelemente abgedeckt sind. Ebenso denkbar ist, dass bei einer beispielsweise höheren Ausstattungsvariante, sämtliche Aufnahmen belegt sind, insbesondere mit einem oder mehreren Potentiometern, einem oder mehreren Drehreglern und einem oder mehreren Drehknöpfen für einen Bowdenzug. Mit dem erfindungsgemäßen Baukastensystem ist es somit möglich, einfach und besonders flexibel auf unterschiedlichste Ausstattungsanforderungen zu reagieren und unterschiedlichste Ausstattungswünsche durch eine geeignete Kombination der Elemente des Baukastensystems zu realisieren.

Zweckmäßig weist das Baukastensystem zumindest ein Blendenelement zum Verkleiden des Grundgehäuses auf. Hierbei können unterschiedlichste Blendenelemente, beispielsweise aus Kunststoff, Holz oder Metall vorgesehen sein, wodurch wiederum unterschiedlichste Ausstattungsvarianten und insbesondere auch unterschiedlichste Qualitätsansprüche befriedigt werden können. Hierbei ist denkbar, dass beispielsweise ein aus Kunststoff ausgebildetes Blendenelement eine vergleichsweise kostengünstige und robuste Alternative für eine einfache Ausstattungsvariante darstellt, wogegen beispielsweise ein Blendenelement aus poliertem Holz, Kunststoff, insbesondere Silikon, oder Aluminium einen eher höheren Qualitätsanspruch befriedigt. Durch das Vorhalten unterschiedlichster Blendenelemente kann die Variantenbildung des Bediengerätes mit Hilfe des erfindungsgemäßen Baukastensystems weiter gesteigert werden.

Zweckmäßig sind drei Aufnahmen vorgesehen, die linear oder in einer Dreiecksanordnung am Grundgehäuse angeordnet sind. Hierdurch kann eine geometrische, funktionale und damit auch klar übersichtliche Anordnung der einzelnen Aufnahmen und damit auch der einzelnen Bedienelemente, wie beispielsweise Potentiometer, Drehregler oder Drehknopf erreicht werden. Die Aufnahmen und die Bedienelemente sind dabei stets so ausgebildet, dass in einer Aufnahme alternativ einzelne Bedienelemente bzw. das Abdeckelement aufgenommen werden können. Neben einer linearen und dreieckigen Anordnung sind auch jegliche andere mögliche Anordnungen für das Baukastensystem denkbar.

Bei einer weiteren vorteilhaften Ausführungsform der erfindungsgemäßen Lösung weist das Grundgehäuse zumindest eine weitere Aufnahme für einen Druckschalter auf. Neben den drehbaren Bedienelementen, wie beispielsweise Potentiometer, Drehknopf für einen Bowdenzug oder Drehregler, ist somit auch das Anordnen von Druckschaltern bzw. Drucktastern denkbar, mittels welchen weitere Funktionen über das Bediengerät steuerbar sind.

Bei einer weiteren vorteilhaften Ausführungsform der erfindungsgemäßen Lösung ist das Potentiometer, der Drehregler oder der Drehknopf, das heißt generell das drehbare Bedienelement, mittels einer Rastverbindung mit dem vorderen Gehäuseteil verbunden, das heißt verrastet. Derartige Rastverbindungen können einfach mittels beispielsweise am drehbaren Bedienelement angeordneten Rastnasen realisiert werden, die einen entsprechenden Hinterschnitt bzw. Rand an der gehäuseseitigen Aufnahme hintergreifen. Durch derartige Rastverbindungen kann insbesondere die Montage der drehbaren Bedienelemente an dem vorderen Gehäuseteil deutlich vereinfacht werden. Zudem besteht die Möglichkeit die einzelnen Baugruppen durch Positionierungshilfen, insbesondere eine Führungsschiene oder Positioniernase, in verschiedenen Positionen und Winkeln an dem Grundgehäuse auszurichten. So bestehen gemäß der Erfindung für die mechanische Gruppe zum Verstellen eines Bowdenzuges verschiedene mögliche Verrastungen, um den Abgang des Bowdenzuges bei unterschiedlichen Einbausituationen gezielt anzuordnen.

Zweckmäßig weist das Baukastensystem eine Leiterplatte auf, an der neben den elektronischen Komponenten eine Beleuchtungseinrichtung, insbesondere mit LEDs, zum Beleuchten der drehbaren Bedienelemente angeordnet. Um insbesondere auch nachts ein sicheres Bedienen des Bediengerätes gewährleisten zu können, ist es erforderlich, die einzelnen Bedienelemente, beispielsweise die drehbaren Bedienelemente oder aber die Druckschalter zu beleuchten, damit ein Benutzer diese sicher und leicht auffinden kann. Durch LEDs lässt sich die Beleuchtung darüber hinaus energetisch günstig und mit nahezu beliebiger Farbauswahl realisieren. Zudem weisen derartige LEDs eine vergleichsweise lange Lebensdauer auf, so dass diese beispielsweise über die gesamte Lebensdauer des Kraftfahrzeuges nicht ausgetauscht werden müssen und funktionieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein mittels eines erfindungsgemäßen Baukastensystems zusam-mengebautes Bediengerät in einer Seiten- und einer Draufsicht gemäß einer ersten Ausführungsform,
- Fig. 2: eine Darstellung wie in Fig. 1, jedoch bei einem alternativen Zusammenbau,
- Fig. 3: eine Draufsicht auf ein erfindungsgemäßes Bediengerät mit abgenommenen drehbaren Bedienelementen,
- Fig. 4: eine Draufsicht auf das Bediengerät mit LEDs zur Realisierung einer Beleuchtung,
- Fig. 5: ein erfindungsgemäßes Baukastensystem zum Zusammenbau individueller Bediengeräte.

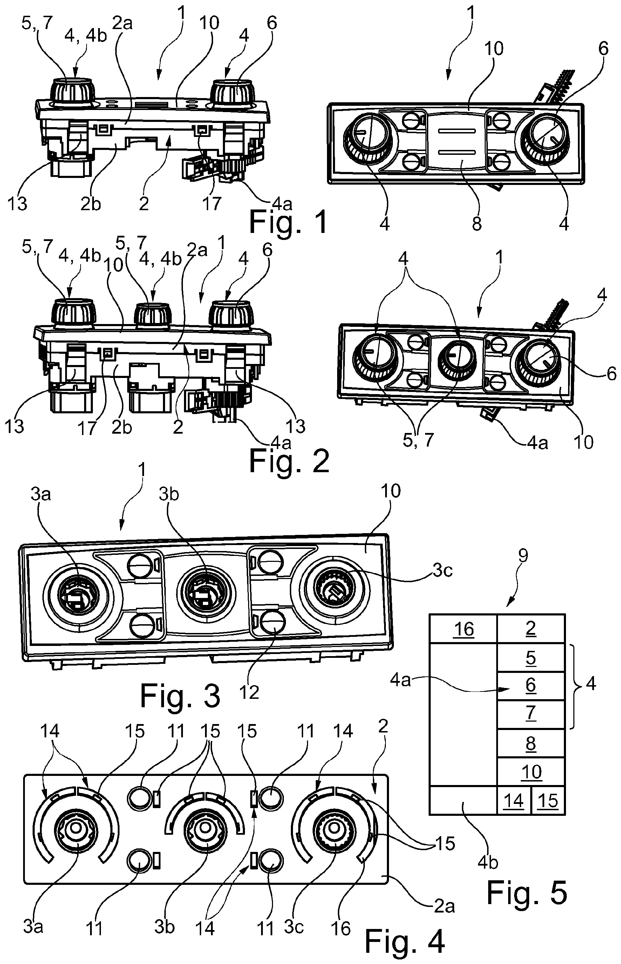

Entsprechend den Figuren 1 bis 3 weist ein erfindungsgemäßes Bediengerät 1, insbesondere zur Beheizung oder Klimatisierung eines Innenraums eines Fahrzeuges, ein Grundgehäuse 2 auf, welches aus zwei Gehäuseteilen, nämlich einem vorderen Gehäuseteil 2a und einem damit verrastbaren hinteren Gehäuseteil 2b besteht. Im vorderen Gehäuseteil 2a sind drei Aufnahmen 3a, 3b und 3c vorgesehen, in denen jeweils ein drehbares Bedienelement 4, insbesondere eine mechanische Baugruppe 4a zum Verstellen von Bowdenzügen, beispielsweise ein Drehknopf 6, eine elektronische Vorrichtung 4b zum Erkennen der Drehknopfposition und ein elektromechanischer Drehregler 7, insbesondere ein Potentiometer 5, montierbar ist. Generell weist das Grundgehäuse 2 zumindest zwei Aufnahmen 3a, 3b, 3c auf. Das vordere und hintere Gehäuseteil 2a, 2b kann dabei über eine Clipverbindung 17 miteinander verbunden sein. Selbstverständlich ist dabei auch denkbar, dass das Gehäuse 2 aus mehr als zwei gehäuseteilen 2a, 2b oder aber nur aus einem einzigen gehäuseteil besteht, wobei es in m letzten Fall in der Art einer Platte ausgebildet ist.

Wird eine der Aufnahme 3a, 3b oder 3c nicht für ein entsprechendes drehbares Bedienelement 4 benötigt, so kann diese mit einem entsprechenden Abdeckelement 8 (vergleiche Figur 1) abgedeckt werden. Alternativ kann auch ein Werkzeugeinsatz verwendet werden, der die nicht genutzte Aufnahme 3a, 3b und/oder 3c beim Spritzgießen verschließt.

Um nunmehr ein derartiges Bedienelement 1 möglichst flexibel und damit auch wirtschaftlich herstellen zu können, wird das erfindungsgemäße Bedienelement 1 mittels einzelner Komponenten eines Baukastensystems 9 (vergleiche Figur 5) individuell und je nach Anforderung, beispielsweise je nach Ausstattungsvariante des Fahrzeuges, zusammengesetzt. Ein derartiges erfindungsgemäßes Baukastensystem 9 umfasst dabei wenigstens ein Grundgehäuse 2 mit zumindest zwei, vorzugsweise drei Aufnahmen 3a, 3b und 3c, in denen jeweils ein drehbares Bedienelement 4, insbesondere eine mechanische Baugruppe 4a zum Verstellen von Bowdenzügen, beispielsweise ein Drehknopf 6, eine elektronische Vorrichtung 4b zum Erkennen der Drehknopfposition und ein elektromechanischer Drehregler 7, insbesondere ein Potentiometer 5, montierbar ist. Des Weiteren umfasst das Baukastensystem 9 zumindest ein Abdeckelement 8 zum Abdecken einer nicht genutzten Aufnahme 3a, 3b oder 3c des Grundgehäuses 2. Mit diesem Baukastensystem 9 lassen sich nun unterschiedlichste Ausstattungsvarianten vergleichsweise zusammensetzen, so dass diese nicht wie bisher separat gefertigt und entsprechend vorgehalten werden mussten.

Des Weiteren kann das Baukastensystem 9 zumindest ein Blendenelement 10 zum Verkleiden des Grundgehäuses 2 aufweisen. Ein derartiges Blendenelement 10 kann beispielsweise aus Kunststoff, aus Holz oder aber auch aus Metall hergestellt werden und damit individuell auf unterschiedlichste Ausstattungsvarianten bzw. Ausstattungslinien abgestellt sein. So ist insbesondere der Einsatz eines aus Kunststoff ausgebildeten Blendenelements 10 bei einer einfachen Ausstattungsvariante bzw. Linie denkbar, wogegen Blendenelemente 10 aus poliertem Holz oder poliertem Metall für höherwertige Ausstattungslinien vorgesehen sind.

Betrachtet man die Figuren 1 bis 4, so kann man erkennen, dass die Aufnahmen 3a, 3b und 3c linear an dem Grundgehäuse 2 angeordnet sind. Darüber hinaus kann das vordere Gehäuseteil 2a des Grundgehäuses 2 zumindest eine weitere Aufnahme 11 zur Aufnahme eines Druckschalters 12 aufweisen. Bei den gezeigten Ausführungsformen weist das Bediengerät 1 jeweils vier Aufnahmen 11 und vier zugehörige Druckschalter 12 auf. Die Aufnahmen 11 sind dabei jeweils zwischen anderen Aufnahmen, beispielsweise zwischen der Aufnahme 3a und der Aufnahme 3b angeordnet und symmetrisch verteilt, wodurch sich eine optisch ansprechende Gestaltung ergibt. Zur Verbindung des drehbaren Bedienelements 4, das heißt beispielsweise des Potentiometers 5, des Drehreglers 7 oder des Drehknopfes 6 kann eine Rastverbindung 13 vorgesehen sein, wodurch die Montage des jeweiligen drehbaren Bedienelementes 4 durch ein einfaches Eindrücken und Verrasten mit einer Leiterplatte 16 bewerkstelligt werden kann. An der Leiterplatte 16 kann darüber hinaus eine Beleuchtungseinrichtung 14 mit unterschiedlichsten LEDs 15 angeordnet sein, die insbesondere eine angenehme Hintergrundbeleuchtung der jeweiligen Bedienelemente 4 bzw. der Druckschalter 12 ermöglichen und dadurch die Bedienung auch bei schlechten Sichtverhältnissen verbessern. Die Beleuchtungseinrichtung 14 bzw. die LEDs 15 können dabei ebenso wie Leiterplatte 16 Bestandteil des jeweiligen Baukastensystems 9 sein. In der Leiterplatte 16 weiter beherbergt sein können beispielsweise Drucktaster, ein Vereisungsschutz, eine Stellmotorsteuerung, eine Auswerteeinrichtung für Signale, eine elektronische Vorrichtung zum Erkennen der Drehknopfposition, einen Drehschalter, einen Prozessor, eine Spannungsversorgung, etc..

Mit dem erfindungsgemäßen Baukastensystem 9 kann somit ein Bediengerät 1 individuell und vergleichsweise flexibel an unterschiedlichste Anforderungen angepasst werden, so dass auch für unterschiedlichste Ausstattungslinien unterschiedlicher Kraftfahrzeuge nicht jeweils eigene Bediengeräte 1 vorgehalten werden müssen, sondern diese jeweils individuell aus dem erfindungsgemäßen Baukastensystem 9 zusammengesetzt werden können. Hierdurch lassen sich insbesondere die Lager- Logistik und Entwicklungs- und Werkzeugkosten deutlich reduzieren und eine deutlich erhöhte Flexibilität bei der Herstellung des Bediengerätes 1 erzielen.

## Patentansprüche

1. Baukastensystem (9) eines Bediengerätes (1), insbesondere zur Beheizung oder Klimatisierung des Innenraumes eines Fahrzeuges, umfassend zumindest ein Grundgehäuse (2) mit zumindest zwei Aufnahmen (3a,3b,3c), in denen jeweils ein drehbares Bedienelement (4) mit einer mechanischen Baugruppe (4a) zum Verstellen von Bowdenzügen, beispielsweise ein Drehknopf (6), eine elektronische Vorrichtung (4b) zum Erkennen der Drehknopfposition und ein elektromechanischer Drehregler (7), insbesondere ein Potentiometer (5), montierbar ist,
**dadurch gekennzeichnet,**
**dass** die mechanische Baugruppe (4a) zum Verstellen eines Bowdenzuges mittels einer Rastverbindung (13) mit dem Grundgehäuse verrastbar ist, wobei für die mechanische Gruppe (4a) verschiedene Verrastungen möglich sind, um den Abgang des Bowdenzuges bei unterschiedlichen Einbausituationen gezielt anzuordnen.

2. Baukastensystem nach Anspruch 1,
**dadurch gekennzeichnet,**
**dass** das Baukastensystem (9) zudem eine Leiterplatte (16) aufweist, welche die elektronischen Komponenten beinhaltet.

3. Baukastensystem nach Anspruch 1 oder 2,
**dadurch gekennzeichnet,**
**dass** das Baukastensystem zumindest ein Abdeckelement (8) zum Abdecken einer nicht genutzten Aufnahme (3a,3b,3c) aufweist.

4. Baukastensystem nach einem der vorhergehenden Ansprüche,
**dadurch gekennzeichnet,**
**dass** das Baukastensystem (9) zumindest ein Blendenelement (10) zum Verkleiden des Grundgehäuses (2) aufweist.

5. Baukastensystem nach einem der vorhergehenden Ansprüche,
**dadurch gekennzeichnet,**
**dass** das Grundgehäuse (2) ein vorderes Gehäuseteil (2a) sowie ein damit über eine Clipverbindung verclipsbares hinteres Gehäuseteil (2b) aufweist, wobei die Aufnahmen (3a,3b,3c) am hinteren Gehäuseteil (2b) des Grundgehäuses (2) angeordnet sind.

6. Baukastensystem nach einem der Ansprüche 1 bis 5,
**dadurch gekennzeichnet,**
**dass** am vorderen Gehäuseteil (2a) des Grundgehäuses (2) zumindest eine weitere Aufnahme (11) für einen Druckschalter (12) vorhanden ist.

7. Baukastensystem nach Anspruch 6,
**dadurch gekennzeichnet,**
**dass** wenigstens eine weitere Aufnahme (11) zwischen zwei Aufnahmen (3a,3b,3c) für die drehbaren Bedienelemente (4) angeordnet ist.

8. Baukastensystem nach einem der vorhergehenden Ansprüche,
**dadurch gekennzeichnet,**
**dass** die Bedienelemente (4) mittels Positionierungshilfen am Grundgehäuse (2) ausrichtbar sind.

9. Baukastensystem nach einem der Ansprüche 2 bis 8,
**dadurch gekennzeichnet,**
**dass** an der Leiterplatte (16) eine Beleuchtungseinrichtung (14), insbesondere mit LEDs (15), zum Beleuchten insbesondere des Potentiometers (5), des Drehreglers (7), des Drehknopfes (6) oder des Druckschalters (12) angeordnet ist.

10. Bediengerät (1), zusammengesetzt aus einem Baukastensystem (9) nach einem der Ansprüche 1 bis 9, mit einem zweiteiligen Grundgehäuse (2) mit zumindest zwei Aufnahmen (3a,3b,3c), in denen jeweils ein drehbares Bedienelement (4), insbesondere eine mechanische Baugruppe (4a) zum Verstellen von Bowdenzügen, beispielsweise ein Drehknopf (6), eine elektronische Vorrichtung (4b) zum Erkennen der Drehknopfposition insbesondere ein Potentiometer (5), und ein elektromechanischer Drehregler (7) insbesondere ein Drehschalter, montiert ist.

11. Bediengerät nach Anspruch 10,
**dadurch gekennzeichnet, dass**
zumindest ein Abdeckelement (8) zum Abdecken einer nicht genutzten Aufnahme (3a,3b,3c) vorgesehen ist.

12. Bediengerät nach Anspruch 10 oder 11,
**dadurch gekennzeichnet,**
**dass** zumindest zwei Aufnahmen (3a,3b,3c) baugleich ausgebildet sind, so dass darin wahlweise ein Potentiometer (5), ein Drehregler (7), ein Drehknopf (6) anbringbar sind.

## Claims

1. Modular system (9) of an operating device (1), in particular for heating or air conditioning the interior of a vehicle, comprising at least one base housing (2) with at least two receiving units (3a, 3b, 3c) in each of which a rotatable operating element (4) with a mechanical assembly (4a) is mountable for adjusting Bowden cables, e.g. a rotary knob (6), an electronic device (4b) for recognising the position of the rotary knob, and an electromechanical rotary regulator (7), in particular a potentiometer (5),
**characterised in that**
the mechanical assembly (4a) for adjusting a Bowden cable is lockable with the base housing (2) via a snap-on connection (13), wherein different snap-on connections are possible for the mechanical assembly (4a) in order to purposively arrange the deflection of the Bowden cable for different assembly situations.

2. Modular system according to claim 1,
**characterised in that**
the modular system (9) further comprises a printed circuit board (16) containing the electronic components.

3. Modular system according to claim 1 or 2,
**characterised in that**
the modular system comprises at least one cover element (8) for covering an unused receiving unit (3a, 3b, 3c).

4. Modular system according to any of the preceding claims,
**characterised in that**
the modular system (9) comprises at least one facing element (10) for cladding the base housing (2).

5. Modular system according to any of the preceding claims,
**characterised in that**
the base housing (2) comprises a front housing part (2a) and a rear housing part (2b) that can be clipped together with the front housing part via a clip connection, wherein the receiving units (3a, 3b, 3c) are arranged on the rear housing part (2b) of the base housing (2).

6. Modular system according to any of claims 1 to 5,
**characterised in that**
at least one further receiving unit (11) for a pressure switch (12) is provided at the front housing part (2a) of the base housing (2).

7. Modular system according to claim 6,
**characterised in that**
at least one further receiving unit (11) is arranged between two receiving units (3a, 3b, 3c) for the rotatable operating elements (4).

8. Modular system according to any of the preceding claims,
**characterised in that**
the operating elements (4) can be aligned on the base housing (2) by means of positioning aids.

9. Modular system according to any of claims 2 to 8,
**characterised in that**
on the printed circuit board (16) a lighting arrangement (14) is arranged, in particular with LEDs (15), for illuminating in particular the potentiometer (5), the rotary regulator (7), the rotary knob (6) or the pressure switch (12).

10. Operating device (1), comprising a modular system (9) according to any of claims 1 to 9, with a two-part base housing (2) with at least two receiving units (3a, 3b, 3c) in each of which a rotatable operating element (4), in particular a mechanical assembly (4a) is mountable for adjusting Bowden cables, e.g. a rotary knob (6), an electronic device (4b) for recognising the position of the rotary knob, in particular a potentiometer (5) and an electromechanical rotary regulator (7), in particular a rotary switch.

11. Operating device according to claim 10,
**characterised in that**
at least one cover element (8) for covering an unused receiving unit (3a, 3b, 3c) is provided.

12. Operating device according to claim 10 or 11,
**characterised in that**
at least two receiving units (3a, 3b, 3c) are constructed identically, so that a potentiometer (5), a rotary regulator (7), a rotary knob (6) can be optionally arranged therein.

## Revendications

1. Système modulaire (9) d'un appareil de commande (1), en particulier pour le chauffage ou la climatisation de l'habitacle d'un véhicule, comprenant au moins un boîtier de base (2) avec au moins deux cavités (3a, 3b, 3c) dans lesquelles respectivement peuvent être montés un élément de commande rotatif (4) avec un module mécanique (4a) pour déplacer des câbles Bowden, par exemple un bouton rotatif (6), un dispositif électronique (4b) pour identifier la position du bouton rotatif et un régulateur rotatif électromécanique (7), en particulier un potentiomètre (5),
**caractérisé en ce**
**que** le module mécanique (4a) peut être encliqueté pour le déplacement d'un câble Bowden au moyen d'une liaison d'encliquetage (13) avec le boîtier de base (2), dans lequel pour le module mécanique (4a) différents encliquetages sont possibles afin de disposer de manière ciblée la sortie du câble Bowden en cas de différentes situations d'installation.

2. Système modulaire selon la revendication 1,
**caractérisé en ce**
**que** le système modulaire (9) présente de plus une carte de circuit imprimés (16) qui contient les composants électroniques.

3. Système modulaire selon la revendication 1 ou 2,
**caractérisé en ce**
**que** le système modulaire présente au moins un élément de recouvrement (8) pour le recouvrement d'une cavité non utilisée (3a, 3b, 3c).

4. Système modulaire selon l'une quelconque des revendications précédentes,
**caractérisé en ce**
**que** le système modulaire (9) présente au moins un élément de panneau (10) pour le revêtement du boîtier de base (2).

5. Système modulaire selon l'une quelconque des revendications précédentes,
**caractérisé en ce**
**que** le boîtier de base (2) présente une partie de boîtier avant (2a) ainsi qu'une partie de boîtier arrière (2b) clipsable avec celle-ci par le biais d'une liaison par clip, dans lequel les cavités (3a, 3b, 3c) sont disposées sur la partie de boîtier arrière (2b) du boîtier de base (2).

6. Système modulaire selon l'une quelconque des revendications 1 à 5,
**caractérisé en ce**
**qu'**au moins une autre cavité (11) pour un commutateur de pression (12) est présente sur la partie de boîtier avant (2a) du boîtier de base (2).

7. Système modulaire selon la revendication 6,
**caractérisé en ce**
**qu'**au moins une autre cavité (11) est disposée entre deux cavités (3a, 3b, 3c) pour les éléments de commande rotatifs (4).

8. Système modulaire selon l'une quelconque des revendications précédentes,
**caractérisé en ce**
**que** les éléments de commande (4) sont orientables au moyen d'aides au positionnement sur le boîtier de base (2).

9. Système modulaire selon l'une quelconque des revendications 2 à 8,
**caractérisé en ce**
**qu'**un dispositif d'éclairage (14), en particulier avec des DEL (15), pour l'éclairage en particulier du potentiomètre (5), du régulateur rotatif (7), du bouton rotatif (6) ou du commutateur de pression (12) est disposé sur la carte de circuits imprimés (16).

10. Appareil de commande (1) composé d'un système modulaire (9) selon l'une quelconque des revendications 1 à 9, avec un boîtier de base à deux parties (2) avec au moins deux cavités (3a, 3b, 3c), dans lesquelles respectivement sont montés un élément de commande rotatif (4), en particulier un module mécanique (4a) pour déplacer les câbles Bowden, par exemple un bouton rotatif (6), un dispositif électronique (4b) pour identifier la position du bouton rotatif en particulier un potentiomètre (5), et un régulateur rotatif (7) électromécanique en particulier un commutateur rotatif.

11. Appareil de commande selon la revendication 10,
**caractérisé en ce**
**qu'**au moins un élément de recouvrement (8) est prévu pour le recouvrement d'une cavité non utilisée (3a, 3b, 3c).

12. Appareil de commande selon la revendication 10 ou 11,
**caractérisé en ce**
**qu'**au moins deux cavités (3a, 3b, 3c) sont réalisées de manière identique de sorte qu'au choix un potentiomètre (5), un régulateur rotatif (7), un bouton rotatif (6) puisse être monté dedans.
